# EUROPEAN PATENT APPLICATION

(11) **EP 2 407 523 A1**
(43) Date of publication of application: **18.01.2012**
(21) Application number: 10174769.9
(22) Date of filing: 31.08.2010
(51) Int. Cl.: C09J 9/00, C09J 201/00, C09K 3/30

(54) **Adhesive composition and method for its production**

(30) Priority: 15.06.2010 IT VR20100122
(71) Applicant: Siliconi Commerciale S.p.A., 36053 Gambellara (VI) (IT)
(72) Inventor: Conterno, Andrea, 36053, Gambellara (Vicenza) (IT); Conterno, Simone, 36053, Gambellara (Vicenza) (IT)
(74) Representative: Feltrinelli, Secondo Andrea

(57) **Abstract**

Adhesive composition suitable for being applied by a spray system, comprising a composition of one or more adhesive resins in aqueous emulsion and propelling gases and method for making the same.

## Description

### TECHNICAL FIELD OF THE INVENTION

The present invention relates to an adhesive composition and to a method for its production.

### BACKGROUND

Adhesive compositions currently available on the market are of various kinds. Adhesive compositions are known which are based on various types of substances that impart the desired adhesion feature; such compositions may be at the solid, liquid or spray state. In particular, in the field of adhesive compositions used for fabrics, spray adhesive compositions are known which are used, for example in silkscreen printing, embroidery or printing, to hold the fabric still. However, such spray glues basically consist of solvents and such solvent substances may create skin or eye rashes to sensitive subjects. In the same field, aqueous based liquid adhesive compositions are also known. Such liquid glues, however, cannot be applied by spray but optionally by a spray system similar to an airbrush. In this way, however, such liquid aqueous glues are little practical and also, they exhibit a quite high cost. Moreover, the above spray systems for liquid glues require an accurate maintenance and cleaning after each use, thus causing a waste of time to the user.

### OBJECTS OF INVENTION

An object of the invention is to improve the prior art.

Another object of the present invention is to provide an adhesive composition which should be simple and practical to use.

Another object of the present invention is to provide an adhesive composition which should not be harmful to the user.

Another object of the invention is to provide an adhesive composition which should be simple to use and applicable by an application system that does not require a burdensome maintenance. A further object of the present invention is to provide an adhesive composition which should have excellent adhesive and gluing features.

A further object of the present invention is to provide an adhesive composition which should be inexpensive.

According to an aspect of the present invention, these objects are achieved by an adhesive composition according to claim 1. These and other objects are achieved by the dependent claims 2-7 that refer to preferred and advantageous embodiments of the invention.

A further object of the present invention is to provide a method for manufacturing an adhesive composition according to the independent claim 8.

### EMBODIMENTS OF THE INVENTION

The present invention describes an adhesive composition that may be used in the field of silkscreen printing, embroidery and/or fabric printing. The adhesive composition according to the present invention, however, may also be used for any other field and/or type of material requiring an adhesive composition with the features provided by the present invention. In particular, thanks to the thermal resistance features expressed by the particular polymeric components it consists of, the adhesive composition exhibits a high resistance to heat caps and to the high temperatures used for silkscreen printing, embroidery and printing of the fabric or material whereon it is applied. Moreover, the adhesive composition lasts for many applications thanks to its high resistance to high temperatures and to the presence of particular highly adhesive polymeric components in its formulation.

Such adhesive composition, moreover, does not transfer onto the fabric or material whereon it is applied; it is easily reactivated with water.

The adhesive composition comprises: a composition of one or more adhesive polymeric resins at the fluid state, that are nebulised in the form of very small drops or bubbles in a water based solvent so as to obtain an aqueous emulsion.

The above aqueous emulsion therefore consists of the composition of one or more polymeric resins in aqueous emulsion, at a concentration variable between 10% and 80%. Such aqueous emulsion is obtained by the emulsion of the resin composition with a water based solvent, more in general water, at a concentration variable between 10% and 70%.

The composition of one or more polymeric resins present in the aqueous emulsion comprises: styrene-butadiene resin and/or vinyl resins and/or esterified resins and/or, more in general, adhesive polymeric resins and/or adhesive substances of various types, soluble in water and/or other types of resin suitable for being solubilised in an aqueous emulsion, both of the natural and synthetic type. It should be noted that the adhesive composition according to the present invention does not exhibit hazards to the health of a user.

Such adhesive composition, moreover, besides being aqueous-based, constitutes a dispersion with propelling gases so as to be applied in the form of a spray. The adhesive composition object of the present invention therefore is a dispersion of said composition of polymeric resins with propelling gases comprising: propane butane and/or carbon dioxide and/or nitrogen and/or dimethyl ether and/or other gases suitable for the purpose.

Such propelling gases exhibit a concentration variable between 10% and 80%. In order to allow spray applications, such propelling gases are provided under pressure and in this way they produce a micronisation of the adhesive composition and allow the optimum spray application thereof.

Therefore, the adhesive composition according to the present invention, based on water and on a composition of one or more polymeric resins in aqueous emulsion, is in the form of an aqueous spray adhesive composition. In this way, such composition may be applied onto the fabric or on another material in the form of a thin and even "film", obtaining a better performance and quality as regards the subsequent silkscreen printing and/or embroidery and/or printing of the same fabric or material.

The adhesive composition according to the present invention is obtained by cold mixing the various components or through another suitable technology.

The method for making the adhesive composition described above, suitable for being applied through a spray system, comprises the following steps: providing a composition of one or more adhesive polymeric resins in aqueous emulsion, dispersing the aqueous emulsion with propelling gases. The above step of providing a composition of one or more adhesive polymeric resins in aqueous emulsion is obtained by providing such composition at a concentration variable between 10% and 80%, in particular obtained by providing the following types of resin: styrene-butadiene resin and/or esterified resins and/or vinyl resins and/or acrylic resins and/or, in general, adhesive polymers and/or adhesive substances of various types, soluble in water and/or other types of resin suitable for being solubilised in an aqueous emulsion, of natural and/or synthetic origin. The method for making the adhesive composition further comprises the step of emulsifying said aqueous emulsion with one or more water based solvents at a concentration variable between 10% and 70% and/or providing water.

The method for making the adhesive composition further comprises the above step of dispersing the aqueous emulsion with propelling gases that comprise propane butane and/or carbon dioxide and/or nitrogen and/or dimethyl ether and/or other gases suitable for the purpose, in particular at a concentration comprised between 10% and 80%.

Finally, such method comprises the step of applying said adhesive composition by spray. Following the mixing, the adhesive composition is pressurised through a pressurisation system inside a can or another device suitable for spray application, along with the above propelling means. The inside pressure of the can or of they device allows the consequent micronisation or nebulisation of the adhesive composition according to the present invention, with excellent application results without having negative effects of the methods currently used, such as: drop dispensing, excessive application causing the fabric or the substrate whereon such composition is applied to become wet and/or stained.

Several changes and variations can be made to the present invention thus conceived, all falling within the scope of protection of the claims.

## Claims

1. Adhesive composition suitable for being applied by spraying system, comprising a composition of one or more adhesive polymeric resins in water emulsion, **characterized in that** it is a dispersion with propellant gases.

2. Adhesive composition according to claim 1, wherein said composition of one or more adhesive polymeric resins has a concentration in the range from 10% to 80%.

3. Adhesive composition according to claim 1 or 2, wherein said composition of one or more adhesive polymeric resins comprises: styrene butadiene resin and/or vinyl resins and/or esterified resins and/or acrylic resins and/or, generally, adhesive polymers and/or gluing substances of various types which are water-soluble and/or other types of resins suitable for being solubilised in a water emulsion, of natural or synthetic origin.

4. Composition according to claim 1, wherein said water emulsion comprises one or more water-based solvents at a concentration in the range from 10% to 70%.

5. Adhesive composition according to one of the previous claims, wherein said one or more water-based solvents comprises water.

6. Adhesive composition according to claim 1, wherein said propellant gases comprise propane butane and/or carbon dioxide and/or nitrogen and/or dimethyl ether and/or other gases suitable for the purpose.

7. Adhesive composition according to claim 1 or 7, wherein said propellant gases have a concentration in the range from 10% to 80%.

8. Method for producing an adhesive composition, suitable for being applied by spraying system, comprising the following steps:
providing a composition of one or more adhesive polymeric resins in water-emulsion,
dispersing said water emulsion with propellant gases.

9. Method for producing an adhesive composition according to claim 8, wherein said providing step is carried out by providing said composition with one or more adhesive polymeric resins at a concentration in the range from 10% to 80%.

10. Method for producing an adhesive composition according to claim 8 or 9, wherein said providing step is carried out by providing the following types of resins: styrene butadiene resin and/or vinyl resins and/or ester resins and/or acrylic resins and/or, generally, adhesive polymers and/or gluing substances of various types which are water-soluble and/or other types of resins suitable for being solubilised in a water emulsion, of natural or synthetic origin.

11. Method for producing an adhesive composition according to one of claims 8-10, comprising a step of emulsifying said composition of one or more adhesive polymeric resins in water emulsion with one or more water-based solvents at a concentration in the range from 10% to 70%.

12. Process for producing an adhesive composition according to one of claims 8-11, wherein said emulsifying step is carried out by providing water.

13. Process for producing an adhesive composition according to one of claims 8-12, wherein said dispersing step is carried out by dispersing said composition of one or more polymeric resins with propellant gases comprising propane butane and/or carbon dioxide and/or nitrogen and/or dimethyl ether and/or other gases suitable for the purpose.

14. Method for producing an adhesive composition according to one of claims 8 to 13, wherein said dispersing step is carried out by dispersing said composition of one or more polymeric resins with propellant gases at a concentration comprised between 10% and 80%.

15. Method for producing an adhesive composition according to claim 8, comprising the step of applying said adhesive composition by spraying it.
